**Europäisches Patentamt**

**European Patent Office**

**Office européen des brevets**

(19)

(11) Veröffentlichungsnummer: **0 024 715
B1**

(12) **EUROPÄISCHE PATENTSCHRIFT**

(45) Veröffentlichungstag der Patentschrift:
**11.01.84**

(21) Anmeldenummer: **80105025.3**

(22) Anmeldetag: **23.08.80**

(51) Int. Cl.³: **A 47 J 43/14,** A 47 G 19/28

(54) **Vorrichtung zum Schälen gekochter Eier.**

(30) Priorität: **31.08.79 DE 2935219**

(43) Veröffentlichungstag der Anmeldung:
**11.03.81 Patentblatt 81/10**

(45) Bekanntmachung des Hinweises auf die Patenterteilung:
**11.01.84 Patentblatt 84/2**

(84) Benannte Vertragsstaaten:
**AT BE CH DE FR GB IT LI LU NL SE**

(56) Entgegenhaltungen:
**DE - A - 2 614 567**
**GB - A - 1 152 041**
**US - A - 1 776 784**
**US - A - 2 555 193**
**US - A - 3 216 828**
**US - A - 3 552 458**
**US - A - 3 774 525**

(73) Patentinhaber: **Frers, Uwe, Krumm-Hörn 164,
D-2853 Padingbüttel (DE)**
Patentinhaber: **Wasnick, Frank, Auf dem Halm 31,
D-2820 Bremen 77 (DE)**

(72) Erfinder: **Frers, Uwe, Krumm-Hörn 164,
D-2853 Padingbüttel (DE)**
Erfinder: **Wasnick, Frank, Auf dem Halm 31,
D-2820 Bremen 77 (DE)**

(74) Vertreter: **von Raffay, Vincenz, Dipl.-Ing. et al,
Patentanwälte Dipl.-Ing. Vincenz v. Raffay Dipl.-Chem.
Dr. Hans D. Boeters Postfach 32 32 17,
D-2000 Hamburg 13 (DE)**

## Vorrichtung zum Schälen gekochter Eier

Die Erfindung betrifft eine Vorrichtung zum Schälen gekochter Eier mit einer liegenden, drehangetriebenen Trommel mit an der Trommelinnenwand verteilten, einwärts gerichteten Schlagnoppen, die an einer stirnseitigen Eintrittsöffnung einzelne Eier aufnimmt und an einer gegenüberliegenden Abgabeöffnung in einen Schälkanal abgibt, der aus Führungselementen und einem angetriebenen, oberen Schälband besteht, wobei im Schälkanal Sprühdüsen zum Ablösen von Eierschalenstücken vorgesehen sind.

Es ist bereits eine Vorrichtung der vorstehend genannten Art bekannt. Die Führungen dieser bekannten Vorrichtung, die unterhalb des oberen Schälbandes angeordnet sind, werden durch zwei parallel zur Transportrichtung liegende, und drehangetriebene Walzen gebildet. Die Walzen werden in entgegengesetzter Richtung angetrieben. Der Antrieb und die räumliche Zuordnung der den Schälkanal definierenden Teile ist so, daß die Eier flachliegend, d. h. mit ihrer längeren Achse im wesentlichen fortlaufend waagerecht liegend durch den Schälkanal hindurchgefördert werden. Bei dieser Vorrichtung ist es bekannt, in dem Schälkanal Sprühdüsen zum Ablösen von Eierschalenstücken vorzusehen (US-A-3 552 458).

Der Erfindung liegt die Aufgabe zugrunde, eine Vorrichtung der eingangs genannten Art zu schaffen, durch die das automatische Schälen der Eier verbessert und insbesondere sichergestellt wird, daß wirklich die gesamte Schale entfernt wird.

Diese Aufgabe wird dadurch gelöst, daß die Führungselemente seitlich eines angetriebenen, unteren Schälbandes angeordnet sind, daß die Schälbänder mit unterschiedlicher Geschwindigkeit in entgegengesetzter Richtung angetrieben sind und die Eier unter geringem Druck zwischen den Führungselementen über die Spitzen abwälzen.

Dadurch, daß die Eier nach der Erfindung in dem Schälkanal über die Spitzen, d. h. über die Längsachse abgewälzt werden, wird die in der Trommel zerschlagene Schale sicher abgelöst. Dieses wird durch die entsprechende Geschwindigkeitssteuerung der beiden Schälbänder erreicht. Die Sprühdüsen dienen dann dem endgültigen Entfernen der abgelösten Eierschalen. Auch ist es möglich, Eier unterschiedlicher Größe sicher zu schälen.

Bevorzugt ist ein ebenes Halteblech parallel zur Trommelachse im wesentlichen vertikal an der Seite in die Trommel hineingebogen und bildet einen stationären Anschlag in der rotierenden Trommel, der verhindert, daß sich die in der Trommel befindlichen Eier unter der Wirkung der Zentrifugalkraft zusammen mit der Trommelwand umlaufen. Dadurch wird sichergestellt, daß ständig die unerwünschte Relativbewegung zwischen Ei und den Schlagnoppen stattfindet.

Die Schlagnoppen sind z. B. auf beabstandeten Kreisen auf der Trommelinnenwand angeordnet und besitzen die Form eines Linsenkopfes wobei auf jedem Umfangskreis bevorzugt zwei bis drei Noppen sitzen.

Der Durchmesser der Trommel ist etwas größer als die Längsachse der größten zu bearbeitenden Eier und die axiale Länge einer Trommel entspricht etwa der Länge mehrerer Eier, die hintereinander in der Trommel liegen können.

Das obere und das untere Schälband sind beide bevorzugt als elastische Endlosriemen ausgebildet, die endseitig je um eine horizontal gelagerte Umlenkrolle geführt sind und bevorzugt aus gummiertem Kunststoff bestehen. Die beiden Umlenkrollen des oberen Schälbandes sind an den Enden einer Gabel angeordnet, die am Eingang des Schälkanals schwenkbar angelenkt ist. Die Gabel läßt sich an ihrem freien Ende lösbar befestigen. Der Abstand des oberen Schälbandes vom unteren Schälband, und damit der Andruck der beiden Schälbänder gegen die sich drehenden Eier läßt sich einstellen. Jeweils eine der Umlenkrollen des oberen und des unteren Schälbandes ist in Bandrichtung verstellbar, um die Bandspannung verstellen zu können. Das obere Schälband besitzt etwa die halbe Laufgeschwindigkeit wie das untere Schälband, und die seitlichen Führungselemente sind am Eingang des Schälkanals derart geformt, daß sie das Aufrichten der Eier bewirken. Bevorzugt ist das obere Schälband kürzer als das untere Schälband und berührt die Eier erst, wenn diese aufgerichtet sind, um dann die Drehbewegung über die Spitze der Eier einsetzen zu lassen.

Die Sprühdüsen sind bevorzugt im wesentlichen längs der gesamten Länge des Schälkanals angeordnet und sprühen von einer Seite Wasser auf die im Schälkanal befindlichen Eier.

Die Trommel ist zur Abgabeöffnung hin bevorzugt geringfügig geneigt, um einen automatischen Durchlauf der Eier unter der Wirkung einer in Richtung der Trommelachse wirkenden Gewichtskomponente sicherzustellen. Besonders bevorzugt werden die Eier einzeln über eine vor der Eingangsöffnung der Trommel angeordneten Kammer abwärts in die Eingangsöffnung mündende Förderrinne eingegeben. Der Transport der Eier durch die Trommel hindurch erfolgt dann insbesondere auch unter der Wirkung der nachdrückenden Eier der Förderrinne.

Das obere und untere Schälband sowie die Trommel werden bevorzugt mittels Riemen von einem Antriebsmotor angetrieben. Der Antrieb läßt sich jedoch auch mittels anderer bekannter Antriebseinrichtungen durchführen.

Im folgenden wird ein Ausführungsbeispiel der Erfindung anhand der Zeichnung näher erläutert. Es zeigen:

Fig. 1 eine Seitenansicht der erfindungsgemäßen Vorrichtung; und

Fig. 2 einen Schnitt durch die Trommel längs der Linie A-B der Fig. 1.

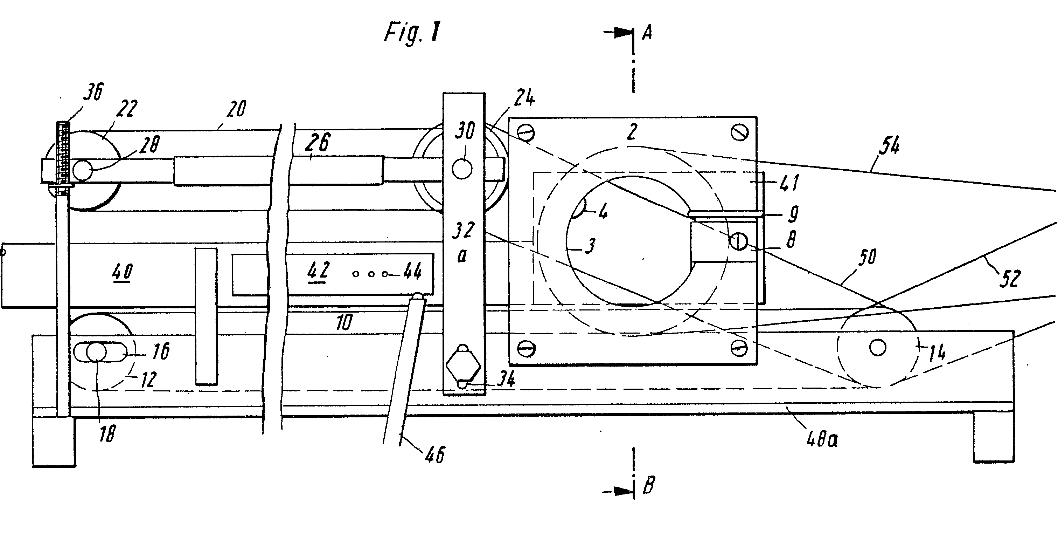

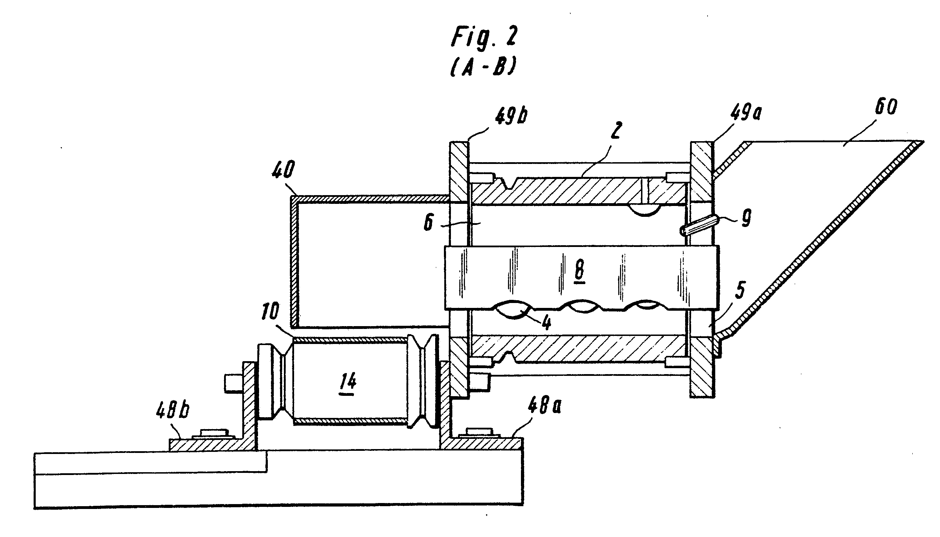

Die Fig. 1 und 2 zeigen eine Ausführungsform der erfindungsgemäßen Vorrichtung in einer Seitenansicht bzw. im Schnitt. An einem Ende eines Sockels 48a sind in vorgegebenem Abstand zwei Stützlager 49a und 49b angeordnet, die eine Trommel 2 drehbar halten, deren Trommelachse von der Eingangsöffnung 5 leicht abwärts zur Abgabeöffnung 6 geneigt ist. Auf der Trommelinnenwand 3 sind einwärts gerichtete, linsenkopfförmige Schlagnoppen 4 befestigt. Jeweils drei Schlagnoppen 4 liegen auf einem eingangsseitigen und einem mittleren Umfangskreis, und auf einem ausgangsseitigen Umfangskreis liegen z. B. zwei Schlagnoppen. Ein ebenes Halteblech 8 ist an beiden Enden an beiden Stützlagern 49a und 49b angeschraubt. Das Halteblech 8 ist parallel zur Trommelachse vertikal an der Seite der Trommel in den Innenraum der Trommel hineingebogen und verhindert, daß sich in der Trommel befindliche gekochte Eier aufgrund der Zentrifugalkraft zur Trommelwand 3 umlaufen. In den Innenraum der Trommel 2 ragen ferner Spüldüsen 9 hinein, die zur Sauberhaltung Wasser in die Trommel hineinspülen.

Neben und geringfügig unter der Abgabeöffnung 6 der Trommel 2 läuft ein erstes Schälband 10, das als endloses gummiertes Kunststoffband ausgebildet ist und an den beiden Umkehrpunkten über horizontal gelagerte Umlenkrollen 12, 14 geführt ist. Eine der Umlenkrollen, die Rolle 14 wird von einem Antriebsmotor über einen Riemen 52 angetrieben, die andere Umlenkrolle 12 ist mit ihrer Achse 18 in zwei Langlöchern 16 in Bandrichtung verschiebbar gelagert, um die Spannung des Schälbandes 10 einstellen zu können.

In Laufrichtung des Schälbandes 10 setzen kurz nach der Trommel 2 zwei seitliche Führungselemente 40 ein, die in vorgegebenem Abstand voneinander längs des unteren Schälbands 10 verlaufen und zusammen mit dem unteren Schälband 10 sowie einem über die unteren Schälband 10 angeordneten oberen Schälband 20 einen Schälkanal für die aus der Trommel 2 auf das untere Schälband 10 abgegebenen gekochten Eier bilden.

Das obere Schälband 20 ebenfalls als ein Endlosband aus gummiertem Kunststoffmaterial ausgebildet läuft an seinen beiden Umkehrpunkten um je eine Umlenkrolle 22, 24, die an horizontalen Achsen 28, 30 in einer Gabel 26 gelagert ist. Die Gabel 26 ist an ihrem der Trommel 2 zugewandten Ende an zwei parallel auf den Sockeln 48a und 48b sitzenden feststehenden Holmen 32a schwenkbar angebracht. Der Abstand zwischen unterem Schälband 10 und oberem Schälband 20 ist einstellbar. Zu diesem Zweck sind die Holme 32a — und damit die Schwenkachse 30 — in den vertikalen Langlöchern 34 relativ zu den Sockeln 48a und 48b in der Höhe verstellbar.

Das andere Ende der Gabel 26, welches die Umlenkrolle 22 trägt, läßt sich ebenfalls längs einer Gewindestange 36 relativ zum Sockel 48a in seiner Höhe verstellen. Zur Einstellung der Bandspannung des oberen Schälbandes 20 ist die Umlenkrolle 22 auf der Gabel 26 in Bandrichtung längs verschiebbar angebracht.

Längs des Schälkanals 10, 20, 40 ragen in den Schälkanal an einem Sprührohr 42 verteilte Sprühdüsen 44 seitwärts in den Sprühkanal hinein und werden über eine Zuführleitung 46 mit Wasser versorgt, welches in den Schälkanal hineingesprüht wird.

Vor der Eintrittsöffnung 5 der Trommel 2 befindet sich zum Zuführen der gekochten Eier eine abwärts geneigte, in die Eingangsöffnung 5 mündende Förderrinne 60, die die Eier einzeln und hintereinander in die Trommel 2 abgibt. In der Trommel 2 wird die Schale von den Schlagnoppen 4 angeschlagen, wobei das Ei gegen das Halteblech 8 abläuft.

Durch die Neigung der Trommelachse sowie den Druck der von der Förderrinne 60 nachfolgenden Eier werden die angeschlagenen Eier aus der Abgabeöffnung 6 auf das untere Schälband 10 abgegeben und in den Schälkanal 10, 20, 40 hineintransportiert, wobei die seitlichen Führungselemente 40 Einführabschnitte 41 aufweisen, unter deren Führung sich die Eier aufgerichtet in den entsprechend engen Schälkanal begeben. Anschließend wirkt auch das obere Schälband 20 auf die im Schälkanal befindlichen Eier ein. Da das obere Schälband 20 mit einer wesentlich kleineren Geschwindigkeit in entgegengesetzter Richtung umläuft als das untere Schälband 10, werden die Eier unter dem geringen Andruck der Schälbänder 10, 20 zwischen dem Führungselement 40 längs des Schälkanals 10, 20, 40 über ihre Spitzen abgewälzt, wobei sich die in der Trommel angeschlagenen Schalenabschnitte vom Ei lösen. Restliche kleinere Schalenstücke werden von dem durch die Sprühdüsen 44 in den Schälkanal eingesprühten Wasser abgelöst. Die Eier verlassen den Schälkanal 10, 20, 40 vollständig geschält. Durch die ständige Wasserzufuhr in die Trommel 2 und den Schälkanal 10, 20, 40 besitzt die Vorrichtung selbstreinigende Wirkung.

Der Antrieb der Trommel 2 sowie der beiden Schälbänder 10, 20 erfolgt mittels Riemen 54, 50 bzw. 52 direkt bzw. indirekt von einem Antriebsmotor aus.

**Patentansprüche**

1. Vorrichtung zum Schälen gekochter Eier mit einer liegenden, drehangetriebenen Trommel (2) mit an der Trommelinnenwand (3) verteilten, einwärts gerichteten Schlagnoppen (4), die an einer stirnseitigen Eintrittsöffnung (5) einzelne Eier aufnimmt und an einer gegenüberliegenden Abgabeöffnung (6) in einen Schälkanal abgibt, der aus Führungselementen (40) und einem angetriebenen, oberen Schälband (20) besteht, wobei im Schälkanal Sprühdüsen zum Ablösen von Eierschalenstücken vorgesehen sind, dadurch gekennzeichnet, daß die Führungselemente (40) seitlich eines angetriebenen, unteren Schälbandes (10) angeordnet sind, daß die Schälbänder (10, 20) mit unterschiedlicher Geschwindigkeit in entgegengesetzter Richtung angetrieben sind und die Eier unter geringem Druck zwischen den Führungselementen über die Spitzen abwälzen.

2. Vorrichtung nach Anspruch 1, dadurch gekennzeichnet, daß ein Halteblech (8) parallel zur Trommelachse vertikal an einer Seite in die Trommel (2) hineinragt.

3. Vorrichtung nach Anspruch 1 oder 2, dadurch gekennzeichnet, daß in der Trommel (2) Spüldüsen (9) zur Säuberung vorgesehen sind.

4. Vorrichtung nach einem der vorstehenden Ansprüche, dadurch gekennzeichnet, daß die Schlagnoppen (4), die eine linsenkopfförmige Gestalt besitzen, auf beabstandeten Kreisen auf der Trommelinnenwand (3) angeordnet sind.

5. Vorrichtung nach einem der vorstehenden Ansprüche, dadurch gekennzeichnet, daß der Durchmesser der Trommel (2) etwas größer ist als die Längsachsen der zu schälenden Eier.

6. Vorrichtung nach einem der vorstehenden Ansprüche, dadurch gekennzeichnet, daß die Schälbänder (10, 20) als elastische Endlosriemen ausgebildet sind, die über zugeordnete, horizontal gelagerte Umlenkrollen (12, 14; 22, 24) geführt sind.

7. Vorrichtung nach einem der vorstehenden Ansprüche, dadurch gekennzeichnet, daß die beiden Umlenkrollen (22, 24) des oberen Schälbandes (20) an den Enden einer Gabel (26) angeordnet sind, die am Eingang des Schälkanals (10, 20, 40) schwenkbar angelenkt ist, und daß die Gabel (26) an ihrem freien Ende lösbar befestigt ist.

8. Vorrichtung nach einem der vorstehenden Ansprüche, dadurch gekennzeichnet, daß der Abstand zwischen den beiden Schälbändern (10, 20) einstellbar ist.

9. Vorrichtung nach einem der vorstehenden Ansprüche, dadurch gekennzeichnet, daß das obere Schälband (20) etwa mit der halben Laufgeschwindigkeit umläuft wie das untere Schälband (10).

10. Vorrichtung nach einem der vorstehenden Ansprüche, dadurch gekennzeichnet, daß die Trommel (2) zur Abgabeöffnung (6) hin geringfügig abwärts geneigt ist.

## Claims

1. Apparatus for shelling boiled eggs, having a driven horizontal drum (2) with inwardly directed striking members (4) distributed over the inner wall (3) of the drum, which receives the individual eggs at a frontal intake opening (5) and discharges them at the opposite discharge opening (6) into a shelling channel formed from lateral guide members (40) and an upper and a lower shelling belt (20), and wherein in the shelling channel spray nozzles are provided for removing shell fragments, characterized in that said guide members (40) are positioned lateral to a driven lower shelling belt (10), in that the shelling belt (10, 20) are driven at different speeds and in opposite directions and the eggs rolling by their ends under limited pressure between the guide members.

2. Apparatus according to claim 1, characterized in that a holding plate (8) parallel to the drum axis projects vertically at one side into the drum (2).

3. Apparatus according to claim 1 or 2, characterized in that the drum (2) has cleaning nozzles (9) for cleaning purposes.

4. Apparatus to one of the preceding claims, characterized in that the striking members (4), which are shaped like a lens head, are arranged in spaced circles on the inner wall (3) of the drum.

5. Apparatus according to one of the preceding claims, characterized in that the diameter of the drum (2) is somewhat larger than the longitudinal axis of the eggs to be shelled.

6. Apparatus according to one of the preceding claims, characterized in that the shelling belts (10) are constructed as an elastic endless belt, guide by means of horizontally mounted guide pulleys (11, 14; 22, 24).

7. Apparatus according to one of the preceding claims, characterized in that the two guide pulleys (22, 24) of the upper shelling belt (20) are arranged on the ends of a fork (26) pivotably articulated at the entrance of the shelling channel (10, 20, 40) and in that the free end of the fork (26) is detachably fixed.

8. Apparatus according to one of the preseding claims, characterized in that the distance between the two shelling belts (10, 20) is adjustable.

9. Apparatus according to one of the preceding claims, characterized in that the upper shelling belt (20) travels approximately half the speed of the lower shelling belt (10).

10. Apparatus according to one of the preceding claims, characterized in that the drum (2) is inclined slightly downwards with respect to the discharge opening (6).

## Revendications

1. Appareil pour peler des oeufs cuits, comprenant un tambour (2) à axe à peu près horizontal, qui est entraîné en rotation et dont la paroi interne (3) porte des boutons de tapotement (4) dirigés vers l'intérieur, le tambour recevant les oeufs un à un par une ouverture d'entrée (5) à une extrémité et les délivrant par une ouverture de décharge (6) à l'extrémité opposée du tambour dans un couloir de pelage constitué d'éléments de guidage (40) et d'une bande de pelage commandée (20) située en haut, des pulvérisateurs étant prévus dans le couloir de pelage pour détacher des fragments résiduels des coquilles des oeufs, caractérisé en ce que les éléments de guidage (40) sont disposés à côté d'une bande de pelage commandée (10) prévue en bas et que les bandes de pelage (10, 20) sont entraînées à des vitesses différentes dans des sens opposés et sont disposées de manière que les oeufs, dont les coquilles ont été fractionnées ou fissurées par les boutons dans le tambour, roulent par leurs bouts entre les bandes en étant légèrement comprimés par celles-ci, ce qui provoque le détachement des coquilles.

2. Appareil selon la revendication 1, caractérisé en ce qu'une tôle de retunue (8) fait saillie dans le tambour (2), sur un côté, par une portion verticale parallèle à l'axe du tambour.

3. Appareil selon la revendication 1 ou 2, caractérisé en ce que des pulvérisateurs (9) sont prévus dans le tambour (2) pour le nettoyage.

4. Appareil selon une des revendications précédentes, caractérisé en ce que les boutons de tapotement (4), ayant une forme bombée semblable à une demi-lentille, sont disposés sur la paroi interne (3) du tambour sur des cercles mutuellement espacés.

5. Appareil selon une des revendications précédentes, caractérisé en ce que le diamètre du tambour (2) est un peu plus grand que les axes longitudinaux des oeufs à peler.

6. Appareil selon une des revendications précédentes, caractérisé en ce que les bandes de pelage (10, 20) sond des courroies sans fin élastiques guidées individuellement par des rouleaux des renvoi rotatifs (12, 14; 22, 24) montés horizontalement.

7. Appareil selon une des revendications précédentes, caractérisé en ce que les deux rouleaux de renvoi (22, 34) de la bande de pelage supérieure (20) sont disposés aux extrémités d'une fourche (26) qui est articulée à l'entrée du couloir de pelage (10, 20, 40) et qui est fixée amovible à son extrémité libre.

8. Appareil selon une des revendications précédentes, caractérisé en ce que la distance entre les deux bandes de pelage (10, 20) est réglable.

9. Appareil selon une des revendications précédentes, caractérisé en ce que la bande de pelage supérieure (20) circule à peu près à la moitié de la vitesse de circulation de la bande de pelage inférieure (10).

10. Appareil selon une des revendications précédentes, caractérisé en ce que le tambour (2) est légèrement incliné vers le bas en direction de l'ouverture de décharge (6).

Fig. 1

Fig. 2
(A - B)